# EUROPEAN PATENT SPECIFICATION

(11) **EP 0 475 758 B1**
(45) Date of publication and mention of the grant of the patent: **13.11.1996**
(21) Application number: 91308328.3
(22) Date of filing: 12.09.1991
(51) Int. Cl.: G09B 15/00, G09B 5/06

(54) **Method of multipurpose playback utilization of instrumental music reproduction video tape or the like**
Verfahren zum mehrzweckigen Playback-Gebrauch eines Videobandes oder ähnlichen Mittels für die Reproduktion der Instrumentalmusik
Procédé d'emploi en playback multifonction d'une bande vidéo ou support analogue de reproduction de musique instrumentale

(30) Priority: 14.09.1990 JP 242768/90
(43) Date of publication of application: 18.03.1992
(73) Proprietor: Ninomiya, Masayoshi, Kawaguchi-shi, Saitama-ken (JP); Honda, Syuichiro, Urawa-shi, Saitama-ken (JP)
(72) Inventor: Ninomiya, Masayoshi, Kawaguchi-shi, Saitama-ken (JP)
(74) Representative: Carter, Gerald

(56) References cited:
- FR-A- 2 623 931
- US-A- 3 955 466
- PATENT ABSTRACTS OF JAPAN vol. 9, no. 24 (P-331)31 January 1985 & JP-A- 59 167 887 (BATSUPU KK) 21 September 1984
- PATENT ABSTRACTS OF JAPAN vol. 7, no. 280 (E-216)(1425) 14 December 1983 & JP-A-58 159 081 (TOUSHIBA II EMU AI K.K.) 21 September 1983
- PATENT ABSTRACTS OF JAPAN vol. 15, no. 335 (P-1242)26 August 1991 & JP-A-3 123 381 (MASATAKA NINOMIYA) 27 May 1991

## Description

This invention relates to reproduction of performances of instrumental music utilizing a video tape or optical video disk or the like in such a manner that the user may participate in the performance by playing a part of the music on an instrument.

Karaoke has become very popular in recent years. This is the technique by which a song is sung by a singer along with reproduction of the accompanying music by audio reproduction apparatus, such as a tape or disk player. This trend seems to be settling down as a cultural phenomenon. The trend started with the use of audio tape, but is now continuing mainly with the use of optical video disks of high quality for playing back both picture and sound. A very large amount of software is manufactured and sold for such singing.

Moreover a new Karaoke system has been popularized recently in Japan in which a host computer, which is managed commercially, is adapted to supply sound and picture information to a number of terminals connected to the host computer by communication lines, such as telephone lines. In this system, the host computer generates the sound of the accompanying music and its associated picture, and simultaneously transmits the sound and picture to the terminal by way of the communication line, in accordance with a request made by user operation of the terminal. Furthermore the terminal reproduces the sound and picture in such a manner as to enable the user to sing a song along with the reproduced sound and picture. Thus the system presents the user with beautiful and various pictures, together with the sound of accompanying music, easily and quickly without requiring the user to possess any software.

People learning to play a melodious instrument, such as a flute, a violin, an oboe, a clarinet, a saxophone or a piano, have a need to practice or play their favourite pieces of music (which include small, medium or large pieces, classical or popular) along with the complete accompaniment of a full-scale orchestra, one or more accompanying instruments or the like, whether or not they belong to an orchestra or other instrumental group.

There has long existed a system called "Music Minus One", which has been sold in the form of an audio tape or compact disc, provided for the purpose of enabling a person to practice or play instrumental music as a soloist along with the complete accompaniment of a full-scale orchestra, accompanying instrument or the like. Although the player can satisfactorily perform some pieces of music using such software, there are many pieces of music which can scarcely be performed by the player at all along with the accompaniment, so that the player gains no satisfaction at all from the performance.

The possible reasons as to why such accompanying software for the solo performance of instrumental music has not become practical nor spread are as follows:
A. As for software such as Music Minus One, a soloist is forced to play the music only in dependence on his own hearing of the accompaniment. It is therefore difficult or impossible for the soloist to play the music properly in the following cases:
   1. the solo and accompanying parts of music begin simultaneously,
   2. the music starts with the solo part without any accompaniment,
   3. the soloist begins to play the music after a fermata, which is a sign for indefinitely lengthening a sound,
   4. there is an extremely sharp change in tempo,
   5. the soloist and the accompaniment must be in time after a cadenza, and
   6. there is a phrase in which the solo part and the accompaniment alternate with one another.
   As a result, the number of pieces of music which can be played by such soloists is very small, and it is impossible for soloists to play many pieces of music along with the accompaniment in a practical manner. In order to solve these problems, it has been proposed to add a machine-like sound, such as the sound of a metronome or a weak rendering of a model performance of the solo part to the musical accompaniment. Although these proposals would be acceptable to a player who intends to practice or study a performance, they would be unsatisfactory for a player who wishes to give a performance to be listened to by an audience and would give the player no satisfaction in the performance. This is because the machine-like sound or weak sound of the model performance would be masked by the sound of the player's performance while the player was performing, which would make it very difficult for the player to continue the performance at all. In other words, records, audio tapes and compact discs which require soloists to play only in dependence on their hearing are not practical enough to provide good accompaniment for solo performance of instrumental music.
B. Nobody has noticed demand for the accompanying software before.
C. Although some people have noticed the demand, they think that the marketability and profitability of the software are low.
D. Manufacturing the accompanying software involves a great risk because recording and compilation need to be newly done for it.

Since accompanying software for an opera is said to be about to be put on the market by a company in the near future, possible reasons C and D do not seem to apply. The most likely reasons seem to be the difficulties set out at 1), 2), 3), 4), 5) and 6) at A above.

It is an object of the invention to solve such difficulties by using not only hearing but also vision for seeing a picture of the conductor of the performance of the music in real time. As a result of an experiment with the use of a trial-manufactured video tape, it has been shown that the difficulties referred to above can be solved in this manner. The inventor has concluded on the basis of such experiment that it can be made practical for a person to play the solo part of music along with the reproduction of not only the sound accompaniment of the music but also a picture, such as is provided in the new Karaoke system referred to above.

According to one aspect of the present invention there is provided a method of reproducing a performance of instrumental music such that a user may participate in the performance, the method comprising selectively playing back on sound reproduction apparatus first and second sound recording tracks providing first and second sound recordings for playback of respectively (a) a solo part performed by at least one solo instrument and (b) an accompaniment part performed by at least one accompanying instrument so as to provide (i) playback of the first and second sound recordings simultaneously in a first operational mode so that the solo and accompaniment parts of the performance are heard together, (ii) playback of the first sound recording in a second operational mode without at the same time playing back the second sound recording so that the solo part of the performance is heard with the accompaniment part being omitted in order to enable the user to participate as an accompanist in performance of the music by playing the accompaniment part on an accompanying instrument along with the played back solo part, and (iii) playback of the second sound recording in a third operational mode without at the same time playing back the first sound recording so that the accompaniment part of the performance is heard with the solo part being omitted in order to enable the user to participate as a soloist in performance of the music by playing the solo part on a solo instrument along with the played back accompaniment part, characterised in that the method further comprises playing back on a visual display, in synchronism with the played back sound, a moving image of a conductor conducting the performance so as to indicate the interpretation of the music being played, in order to enable the user to participate in the performance whilst watching the moving image on the visual display and simultaneously listening to the sound from the sound reproduction apparatus.

According to another aspect of the present invention there is provided a system for reproducing a performance of instrumental music such that a user may participate in the performance, the system comprising first sound recording means providing a first sound recording for playback on sound reproduction apparatus of a solo part performed by at least one solo instrument, second sound recording means providing a second sound recording for playback on sound reproduction apparatus of an accompaniment part performed by at least one accompanying instrument, the first and second sound recording means permitting (i) playback of the first and second sound recordings simultaneously in a first operational mode so that the solo and accompaniment parts of the performance are heard together, (ii) playback of the first sound recording in a second operational mode without at the same time playing back the second sound recording so that the solo part of the performance is heard with the accompaniment part being omitted in order to enable the user to participate as an accompanist in performance of the music by playing the accompaniment part on an accompanying instrument along with the played back solo part, and (iii) playback of the second sound recording in a third operational mode without at the same time playing back the first sound recording so that the accompaniment part of the performance is heard with the solo part being omitted in order to enable the user to participate as a soloist in performance of the music by playing the solo part on a solo instrument along with the played back accompaniment part, characterised in that the system further comprises visual recording means providing a visual recording for playback on a visual display, in synchronism with the played back sound, of a moving image of a conductor conducting the performance so as to indicate the interpretation of the music being played, in order to enable the user to participate in the performance whilst watching the moving image and picture information on the visual display and simultaneously listening to the sound from the sound reproduction apparatus.

By use of such a system, it is relatively easy for the user to practice or perform the solo part of the instrumental music along with the reproduction of the accompaniment part thereof by the sound reproduction apparatus without a real accompanist being present, and the necessary sound and picture reproduction can be carried out at home, at a party place or the like. Since the solo part and the accompaniment part are recorded on different sound recording tracks, the tape or disk or the like containing such recording tracks can be utilised in a number of ways to generate added value. The solo part can be performed by the user using various instruments along with reproduction of the accompaniment part by the system. For example, the solo part can be performed by an oboe or clarinet, even if the part was originally performed by a flute. Furthermore the accompaniment part can be performed by a piano, even if the part was originally performed by an orchestra. If these instruments differ from each other in key, a transposed musical score may be prepared. Since the user can play the instrument while watching the reproduced image of the conductor, including the baton in the conductor's hand, the expression of the conductor's face and the upper half of the conductor's body, it is relatively easy for the user to play the solo part of a piece of music in which the solo part and the accompaniment part start simultaneously at the beginning of the piece, that is a piece of music in which there are a relatively large number of fermatas, as well as a piece of music which has an extremely sharp change in tempo, or a piece of music which can be performed by the user with an instrument along with reproduction of the accompaniment part although it would be impossible or difficult for the user to perform the solo part only with the aid of his own hearing. It is also possible for the user to play the solo part of a piece of music having at least one cadenza which can be performed by the user with the help of an assistant.

Where the ordinal number of the currently performed portion of the music is displayed on the display, any desired portion of the music can be optionally reproduced by fast forwarding the tape or disk or the like to the position corresponding to that portion. Thus the user can repeatedly practice or play the same phrase of the music. Also the user can enjoy playing music together with other players whose performance is recorded on the tape or disk or the like in advance, and can play the music at the same tempo as the other players. The user can thus perform the solo part of the music so as to become familiar with the enjoyment or difficulty of the performance. In addition the user can more carefully listen to the sounds of the music so as to be able to better synchronize the solo part of the music with the accompaniment part thereof. The system is therefore useful for improving the user's musical sensitivity and expressability as well as his musical skill, and for providing the user with a new style of musical activity leading towards a richer musical life.

In order that the invention may be more fully understood, reference will now be made, by way of example, to the accompanying drawings, in which:
Figure 1 is a block diagram of an arrangement for personal playing or practice of music in a method which is an embodiment of the present invention;
Figure 2 is a block diagram of an arrangement for playing or practice of music at home in a method which is an embodiment of the present invention;
Figure 3 is a block diagram of an arrangement for playing or practice of music with an assistant at a party place or the like in a method which is another embodiment of the invention; and
Figures 4(a), 4(b), 4(c), and 4(d) are views to illustrate displays on the display monitor in operation of a method in accordance with the invention.

An exemplary embodiment of the present invention is hereafter described in detail with reference to the drawings attached hereto.

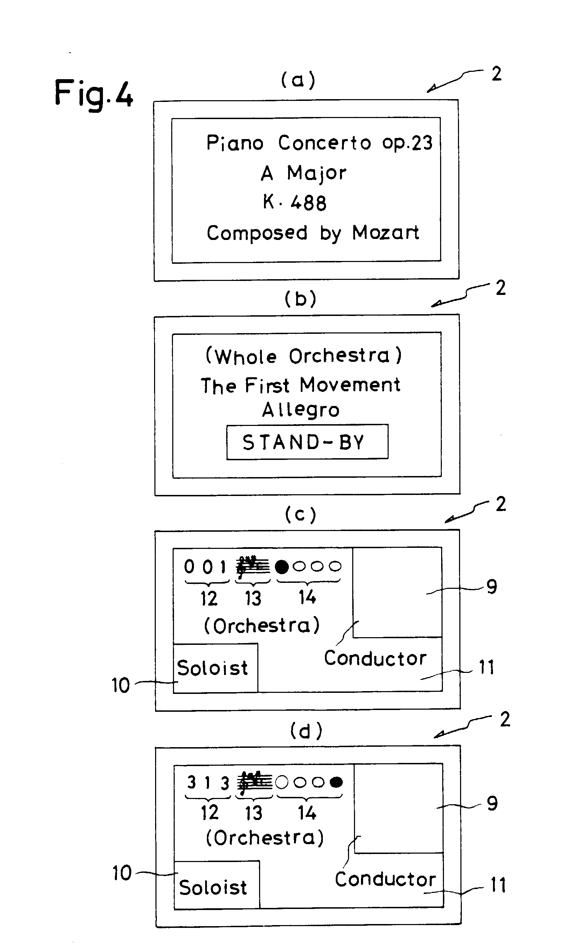

Shown in the drawings are a sound and picture reproducer 1, the face plate 2 of a display monitor, stereo loudspeakers 3 and 4, a musical score 5 on a music stand, a solo player 6, an assistant 7, and an audience 8. The embodiment is a method of multipurpose playback utilization of a video tape or the like in which the performance of instrumental music including a solo part which is performed with a soloist instrument and an accompaniment part which is performed by an orchestra or the like is recorded. The solo and accompaniment parts of the music are recorded on the mutually different sound recording tracks of the video tape or the like in such a manner that the solo and the accompaniment parts are recorded on a monaural sound recording track and a stereo high-fidelity sound recording track, respectively, on an analogue sound recording track and a digital sound recording track, respectively, or on a digital sound recording track and a digital sound recording track, respectively. Picture recording and compilation are executed in the video tape or the like so that the conductor 9, soloist 10 and accompanist 11 of the performance of the music, the ordinal number 12 of the measure of the music, which indicates the currently performed portion of the music, the musical time pattern 13 of the music, the tempo 14 thereof and so forth are displayed on the face plate 2 of the monitor, as shown in FIGS. 4(a), 4(b), 4(c) and 4(d).

There are two ways of recording the performance of the music in a studio or a concert hall to manufacture the video tape or the like. In one of the ways, the performance of the music by the accompanist is first recorded and the performance thereof by the soloist is thereafter recorded, if the music is small in length and relatively staple in tempo and has no cadenza. In the other of the ways, the soloist and the accompanist are acoustically separated from each other and simultaneously perform the music with the use of headphones or the like, and their performed sounds are separately recorded for compilation. At least three cameras are needed for the recording of the pictures of the performance of the music. In other words, at least one camera is needed for each of the soloist 10, the accompanist 11 and the conductor 9. The pictures of the soloist 10, the accompanist 11 and the conductor 9 are synthesized with each other to be displayed on the monitor, if necessary. However, only the picture of the conductor 9 needs to be displayed on the monitor 2 throughout the music if he conducts all of it. The performed sounds reproduced through the loudspeakers 3 and 4 are required to be high in quality, because it is one of the major features of the method that whether the player 6 performs a part of the music as a soloist or as an accompanist along with the reproduction of the other part of the music, he can be present his performance together with the reproduced sound of the music to the audience. To signal the player 6 and give him a feeling of reality, the conductor 9 in the recording needs to give a direction toward the camera at the beginning of a music part which only the player performs except for long cadenza.

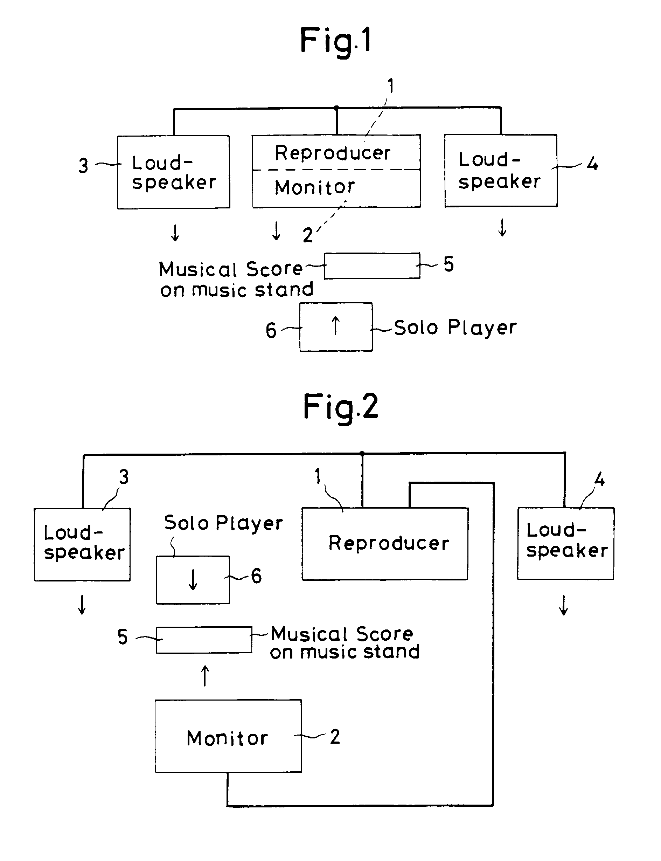

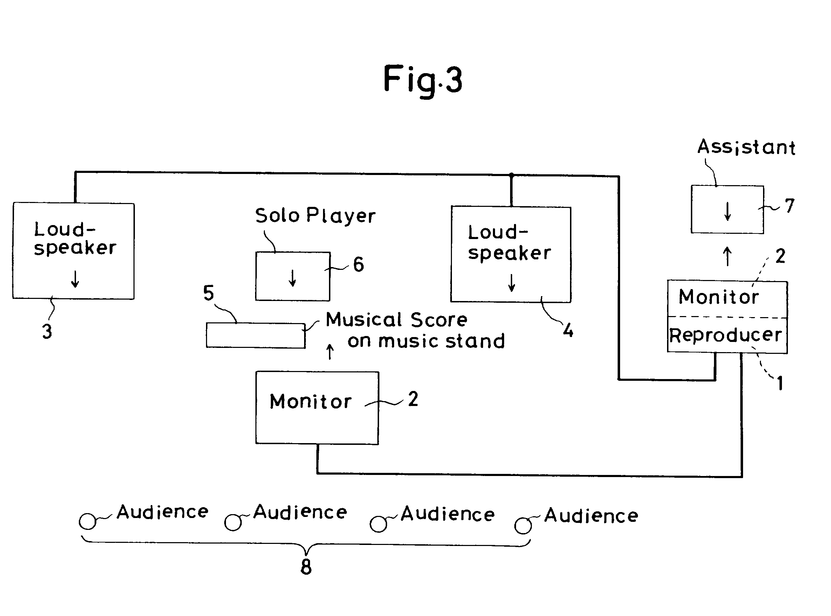

The video tape or the like, which is thus prepared, is set on the sound and picture reproducer 1 disposed as shown in FIGS. 1, 2 and 3, so that the conductor 9, the soloist 10, the accompanist 11, the ordinal number 12 of the measure of the music, the musical time pattern 13 thereof, the tempo 14 thereof and so forth are shown on the face plate 2 of the display monitor through the reproduction of picture signals as shown in FIGS. 4(a), 4(b), 4(c) and 4(d), and the sounds of the music are generated with the stereo loudspeakers 3 and 4 through the reproduction of sound signals. The reproducer 1 can be manipulated not to reproduce the sound from one of the sound recording tracks of the video tape or the like. In other words, the reproducer 1 can be put in such operation as to reproduce the sound signals from both the sound recording tracks of the tape or the like to enable the player 6 to listen to the music performed by both the soloist 10 and the accompanist 11, in such operation as to reproduce the sound signal from only one of the tracks to enable the player to listen to the music part performed by only the accompanist and perform the other music part as a soloist while seeing the showings on the face plate 2 of the display monitor to follow the direction by the conductor 9, the tempo 14 and so forth to enjoy a feeling of reality, or in such operation as to reproduce the sound signal from only the other of the tracks to enable the player to listen to the latter music part performed by only the soloist and perform the former music part as an accompanist with a piano or the like. The video tape or the like can thus be played back for various purposes in the method.

A procedure of playing back the video tape or the like in the method so as to enable the player 6 to listen to the music part reproduced from only one of the sound recording tracks and perform the other music part as a soloist is described in detail from now on. The video tape or the like, the sound and picture reproducer 1, the display monitor and the stereo loudspeakers 3 and 4 are first disposed as shown in FIGS. 1, 2 and 3. The reproducer 1 is then manipulated not to reproduce the sound from the solo sound recording track. A playback button is pressed. As a result, the title of the music is displayed on the face plate 2 of the monitor, and a tuning sound of A or 1a in C major, which is made by the accompanist 11 in the recording, is generated with the loudspeakers 4 and 5. At that time, the player 6 immediately tunes his instrument to the tuning sound. When "STAND-BY" is then displayed on the face plate 2 of the monitor, the motion of the picture on the monitor is temporarily stopped.

When the title of the music is displayed on the monitor as shown in FIG. 4(a), the background of the picture thereon is shown in dark blue. The whole orchestra is then shown on the monitor instead of the background while the name of the composer of the music, the key and opus number thereof and so forth displayed on the monitor. At that time, the tuning sound is reproduced unless the player 6 is to play the piano. When "STAND-BY" is thereafter displayed on the monitor as shown in FIG. 4(b), the whole orchestra, the title of the movement of the music and the tempo thereof are motionlessly shown on the monitor and no sound is generated with the loudspeakers 3 and 4. After such preparatory operation is executed, picture are sequentially displayed on the monitor. When the player 6 has prepared his instrument, the musical score 5, his position and so forth all right, he presses the playback button or has it pressed.

The whole picture thereafter displayed on the face plate 2 of the monitor is generally made of three portions for the conductor 9, the soloist 10 and the accompanist 11 in performance, as shown in FIG. 4(c). The whole picture is also made of other portions for the ordinal number 12 of the measure, which is the serial number from the first measure of the movement of the music, the musical time pattern 13 and the tempo 14. The number 12, the pattern 13 and the tempo 14 are displayed on the monitor through the use of blinking signals. The player 6 plays his instrument while seeing the pictures of the conductor 9, the number 12, the pattern 13 and/or the tempo 14. After the performance of the music is completed, the player 6 presses a stop button or has it pressed. As a result, a picture similar to that shown in FIG. 4(c) is displayed on the monitor to indicate the completion of the performance of the music, and a sound is reproduced to indicate the completion. However, if the next movement of the music or other music is to be subsequently performed, the player 6 presses a temporary stop button and executes similar operation. If the music has a number of movements as a concerto does, the title of the music, the names of the movements and "STAND-BY" are displaying on the monitor at the beginning of each of the movements, as shown in FIG. 4(b). However, two movements of some music are performed without intermission. In that case, such displayed is not done on the monitor between the movements and the player 6 therefore needs to take appropriate action for the situation.

A way in which the player 6 synchronizes his performance as a soloist with that of the orchestra after cadenza is described from now on. The cadenza is a music part and performed by only the soloplayer toward the end of the music to enable him to fully show his performing skill. The length of the cadenza differs from music to music. The solo player freely performs the cadenza to fully show his performing skill. Therefore, the time of the performance of the cadenza and the tempo thereof depend on the player. The conductor 9 usually does not give any direction for the cadenza.
A. If the cadenza is shorter in length than about 10 seconds:
   Since the length of the cadenza is very short, it is difficult to manipulate the reproducer 1. Therefore, a direction by the conductor for the cadenza is recorded in the video tape or the like in advance. The player 6 performs the cadenza under the recorded direction although he may be unwilling to do so. However, since the length of the cadenza is very short, the player should not feel any trouble in performing it under the direction. He needs to carefully practice the performance.
B. If the cadenza is longer in length than about 10 seconds:
   The performance of the cadenza by the solo player 6 needs the cooperation of the assistant 7. About one beat before the start of the direction by the conductor 9 for the accompaniment after the cadenza, a sign such as a red circle is displayed on the face plate 2 of the monitor. Digits of 1, 2, 3, 4, 5, 6, 7, 8 and 9 are sequentially displayed in the sign for groups of several frames of the picture on the monitor, respectively. A mark is previously put for the musical note on the score 5, which is located about one beat before the start of the direction for the accompaniment. The assistant 7 memorizes the musical note to distinguish it from the others. The steps of the performance of the cadenza are described as follows:
   (1) The solo player 6 continues to freely perform the cadenza from the beginning thereof.
   (2) As soon as he begins to perform the cadenza, the assistant 7 presses the temporary stop button of the sound and picture reproducer 1. At that time, a motionless picture must be displayed on the monitor.
   (3) Subsequently, the assistant 7 manipulates the reproducer 1 to quickly run the video tape or the like and temporarily stop it in a position corresponding to the above-mentioned musical note located about one beat before the beginning of the accompaniment.
   (4) The assistant 7 presses the playback button of the reproducer 1 as the player 6 performs the musical note.

The time from the pressing of the playback button of the reproducer 1 during the temporary stoppage of the video tape or the like to the reproduction of the picture and the sound on the monitor subtly differs from case to case. Therefore, the player 6 and the assistant 7 need to carefully practice in advance to find out at which of the above-mentioned digits in the sign on the face plate 2 of the monitor the assistant should press the play back button to synchronize the reproduction of the picture with the performance of the cadenza. In the step (3), the assistant 7 needs to make a fine adjustment for the synchronization on the basis of the digit. Therefore, the careful practice is necessary for such large-scale cadenza, and the responsibility and burden of the assistant 7 are large, but they can do all right if they are accustomed to the performance and the manipulation.

The present invention is not confined to the embodiment described above, but may be embodied or practiced in other various ways. For example, it may be done that the sound is not reproduced from the accompaniment sound recording track and the player 6 performs the accompaniment part of the music with the piano or the like along with the reproduction of the picture of the soloist 10 and that of the sound of the solo part of the music.

## Claims

1. A method of reproducing a performance of instrumental music such that a user may participate in the performance, the method comprising selectively playing back on sound reproduction apparatus (1, 3, 4) first and second sound recording tracks providing first and second sound recordings for playback of respectively (a) a solo part performed by at least one solo instrument and (b) an accompaniment part performed by at least one accompanying instrument so as to provide (i) playback of the first and second sound recordings simultaneously in a first operational mode so that the solo and accompaniment parts of the performance are heard together, (ii) playback of the first sound recording in a second operational mode without at the same time playing back the second sound recording so that the solo part of the performance is heard with the accompaniment part being omitted in order to enable the user to participate as an accompanist in performance of the music by playing the accompaniment part on an accompanying instrument along with the played back solo part, and (iii) playback of the second sound recording without at the same time playing back the first sound recording in a third operational mode so that the accompaniment part of the performance is heard with the solo part being omitted in order to enable the user to participate as a soloist in performance of the music by playing the solo part on a solo instrument along with the played back accompaniment part, characterised in that the method further comprises playing back on a visual display (2), in synchronism with the played back sound, a moving image of a conductor conducting the performance so as to indicate the interpretation of the music being played, in order to enable the user to participate in the performance whilst watching the moving image on the visual display (2) and simultaneously listening to the sound from the sound reproduction apparatus (1, 3, 4).

2. A. system for reproducing a performance of instrumental music such that a user may participate in the performance, the system comprising first sound recording means providing a first sound recording for playback on sound reproduction apparatus (1, 3, 4) of a solo part performed by at least one solo instrument, second sound recording means providing a second sound recording for playback on sound reproduction apparatus (1, 3, 4) of an accompaniment part performed by at least one accompanying instrument, the first and second sound recording means permitting (i) playback ofthe first and second sound recordings simultaneously in a first operational mode so that the solo and accompaniment parts of the performance are heard together, (ii) playback of the first sound recording in a second operational mode without at the same time playing back the second sound recording so that the solo part of the performance is heard with the accompaniment part being omitted in order to enable the user to participate as an accompanist in performance of the music by playing the accompaniment part on an accompanying instrument along with the played back solo part, and (iii) playback of the second sound recording in a third operational mode without at the same time playing back the first sound recording so that the accompaniment part of the performance is heard with the solo part being omitted in order to enable the user to participate as a soloist in performance of the music by playing the solo part on a solo instrument along with the played back accompaniment part, characterised in that the system further comprises visual recording means providing a visual recording for playback on a visual display (2), in synchronism with the played back sound, of a moving image of a conductor conducting the performance so as to indicate the interpretation of the music being played, in order to enable the user to participate in the performance whilst watching the moving image and picture information on the visual display (2) and simultaneously listening to the sound from the sound reproduction apparatus (1, 3, 4).

3. A system according to claim 2, wherein the visual recording means provides a visual recording for playback on the visual display of a title frame indicating the title of the music to be played before the performance begins.

4. A system according to claim 2 or 3, wherein the visual recording means provides a visual recording for playback on the visual display of picture information indicative of the portion of the music currently being played.

5. A system according to claim 2, 3 or 4, wherein the visual recording means provides a visual recording for playback on the visual display of a flashing indicator indicating the tempo of the music.

6. A system according to claim 2, 3, 4 or 5, wherein the visual recording means provides a visual recording for playback on the visual display of musical notation indicating the musical time pattern of the music.

7. A system according to any one of claims 2 to 6, wherein the visual recording means provides a visual recording for playback on the visual display of picture information providing an advance indication of the start of a cadenza in the performance.

8. A system according to any one of claims 2 to 7, wherein the visual recording means provides a visual recording for playback on the visual display of picture information indicative of a musical note to be played by the soloist at the end of a cadenza in the performance.

9. A system according to any one of claims 2 to 8, wherein the visual recording means provides a visual recording for playback on the visual display of picture information indicative of the end of the performance.,

10. A system according to any one of claims 2 to 9, wherein the visual recording means provides a visual recording for playback on the visual display so as to provide a split screen representation having two or more parts showing respectively the image of the conductor and images of one or more instrument players.

## Patentansprüche

1. Verfahren zur Reproduktion einer Darbietung von Instrumentalmusik derart, dass ein Anwender an der Darbietung teilhaben kann, wobei das Verfahren aus den nachfolgenden Verfahrensschritten besteht: selektives Playback auf einer Tonwiedergabeeinrichtung (1,3,4) von ersten und zweiten Tonaufnahmespuren, welche erste und zweite Tonaufnahmen für das Playback von jeweils (a) einem Solopart, welcher von mindestens einem Soloinstrument ausgeführt wird, und (b) einem Begleitungspart, welcher von wenigstens einem Begleitinstrument ausgeführt wird, um so (i) das Playback der ersten und zweiten Tonaufnahmen gleichzeitig in einem ersten Betriebsmodus zu ermöglichen, so dass die Solo- und Begleitungsparts der Darbietung zusammen gehört werden, (ii) das Playback der ersten Tonaufnahme in einem zweiten Betriebsmodus ohne gleichzeitiges Playback der zweiten Tonaufnahme zu ermöglichen, so dass der Solopart der Darbietung ohne den Begleitpart gehört wird, um dem Anwender zu ermöglichen als Begleitmusiker an der Darbietung der Musik teilzunehmen, in dem er den Begleitungspart auf einem Begleitinstrument mit dem Playback Solopart spielt, und (iii) das Playback der zweiten Tonaufnahme ohne gleichzeitiges Playback der ersten Tonaufnahme in einem dritten Betriebsmodus zu ermöglichen, so dass der Begleitungspart der Darbietung ohne den Solopart gehört wird, um es dem Anwender zu ermöglichen als Solist an der Darbietung der Musik teilzunehmen, in dem er den Solopart auf einem Soloinstrument, während des Playbacks des Begleitungsparts, spielt, dadurch gekennzeichnet, dass das Verfahren desweitern begreift Playback auf einer Bildanzeigeeinrichtung (2), synchron mit dem Playbacksound, eines bewegten Bildes eines die Darbietung leitenden Dirigenten, um so die Interpretation der gespielten Musik anzuzeigen, damit es dem Anwender ermöglicht wird, an der Darbietung teilzunehmen, während er das bewegte Bild auf der Bildanzeigeeinrichtung (2) anschaut und gleichzeitig dem Ton vom Tonwiedergabegerät (1,3,4) zuhört.

2. System zur Wiedergabe einer Darbietung von Instrumentalmusik derart, dass ein Anwender an der Darbietung teilnehmen kann, wobei das System begreift: eine erste Tonaufnahmeeinrichtung zur Bereitstellung einer ersten Tonaufnahme für Playback auf einem Tonwiedergabegerät (1,3,4) eines Soloparts, welcher mindestens von einem Soloinstrument ausgeführt wird, eine zweite Tonaufnahmeeinrichtung zur Bereitstellung einer zweiten Tonaufnahme für Playback auf einer Tonwiedergabeeinrichtung (1,3,4) eines Begleitparts, welcher von mindestens einem Begleitinstrument ausgeführt wird, wobei die ersten und zweiten Tonaufnahmeeinrichtungen es erlauben, (i) Playback der ersten und zweiten Tonaufnahmen gleichzeitig in einem ersten Betriebsmodus zu ermöglichen, so dass die Solo- und Begleitungsparts der Darbietung zusammen gehört werden, (ii) Playback der ersten Tonaufnahme in einem zweiten Betriebsmodus ohne gleichzeitiges Playback der zweiten Tonaufnahme zu ermöglichen, so dass der Solopart der Darbietung ohne den Begleitungspart gehört wird, um so dem Anwender zu ermöglichen als ein Begleitmusiker an der Darbietung der Musik durch Spielen des Begleitparts auf einem Begleitinstrument während des Playbacks des Soloparts zu spielen und (iii) Playback der zweiten Tonaufnahme in einem dritten Betriebsmodus ohne gleichzeitiges Playback der ersten Tonaufnahme zu ermöglichen, so dass der Begleitungspart der Darbietung gehört wird ohne den Solopart, um so dem Anwender zu erlauben, als Solist an der Darbietung der Musik durch Spielen des Soloparts auf einem Soloinstrument während des Playbacks des Begleitsparts teilzunehmen, dadurch gekennzeichnet, dass das System desweitern umfasst eine Bildaufzeichnungseinrichtung zum Bereitstellen einer Bildaufnahme für Playback auf einer Bildanzeigevorrichtung (2), synchron mit dem Playbacksound, eines bewegten Bildes eines Dirigenten, welcher die Darbietung leitet, um so die Interpretation der gespielten Musik anzuzeigen und dem Anwender zu ermöglichen an der Darbietung teilzunehmen, während er das bewegte Bild und die Bildinformation auf der Bildanzeigeeinrichtung (2) ansieht und gleichzeitig dem Ton des Tonwiedergabegerätes (1,3,4) zuhört.

3. System nach Anspruch 2, bei welchem die Bildaufnahmeeinrichtung eine Bildaufnahme für Playback auf der Bildanzeigeeinrichtung einer Titeltafel, welche den Titel der zu spielenden Musik vor Beginn der Darbietung angibt, bereitstellt.

4. System nach Anspruch 1 oder 2, bei welchem die Bildaufnahmeeinrichtung eine Bildaufnahme für Playback auf der Bildanzeigeeinrichtung einer Bildinformation, welche den Teil der gerade gespielten Musik dargestellt, bereitstellt.

5. System nach Anspruch 2, 3 oder 4, bei welchem die Bildaufnahmeeinrichtung eine Bildaufnahme für Playback auf der Bildanzeigeeinrichtung einer blitzenden Anzeige, welche das Tempo der Musik angibt, bereitstellt.

6. System nach Anspruch 2, 3, 4 oder 5, bei welchem die Bildaufnahmeeinrichtung eine Bildaufnahme für Playback auf der Bildanzeigeeinrichtung einer Musikbezeichnung, welche den musikalischen Takt der Musik angibt, bereitstellt.

7. System nach einem der Ansprüche 2 bis 6, bei welchem die Bildaufnahmeeinrichtung eine Bildaufnahme für Playback auf der Bildanzeigeeinrichtung einer Bildinformation, welche eine Voranzeige des Beginns einer Kadenz in der Darbietung liefert, bereitstellt.

8. System nach einem der Ansprüche 2 bis 7, bei welchem die Bildaufnahmeeinrichtung eine Bildaufnahme für Playback auf der Bildanzeigeeinrichtung einer Bildinformation, welche eine vom Solisten am Ende einer Kadenz der Darbietung zu spielende Musiknote anzeigt, bereitstellt.

9. System nach einem der Ansprüche 2 bis 8, bei welchem die Bildaufnahmeeinrichtung eine Bildaufnahme für Playback auf der Bildanzeigeeinrichtung einer Bildinformation, welche das Ende der Darbietung darstellt, bereitstellt.

10. System nach einem der Ansprüche 2 bis 9, bei welchem die Bildaufnahmeeinrichtung eine Bildaufnahme für Playback auf der Bildanzeigeeinrichtung bereitstellt, um so eine geteilte Schirmdarstellung mit zwei oder mehr Teilen, welche jeweils das Bild des Dirigenten und Bilder von einem oder mehreren Instrumentalisten zeigen, bereitstellt.

## Revendications

1. Procédé de reproduction d'une présentation de musique instrumentale de telle sorte, qu'un usager peut participer à la présentation, la méthode comprenant le playback sélectif sur un appareil de reproduction de son (1,3,4) de première et seconde pistes d'enregistrement de sons fournissant des premier et second enregistrements de sons pour le playback de (a) une partie solo présentée par au moins un instrument solo et (b) une partie d'accompagnement présentée par au moins un instrument d'accompagnement, respectivement, de sorte à fournir (i) le playback des premier et second enregistrements de sons simultanés dans un premier mode d'opération de sorte que les parties solo et d'accompagnement de la présentation sont entendues ensemble, (ii) le playback du premier enregistrement de sons dans un second mode de fonctionnement sans le playback simultané du second enregistrement de sons de sorte que la partie solo de la présentation est entendue sans la partie d'accompagnement, afin de permettre à l'usager de participer comme accompagnateur dans la présentation de musique en jouant la partie d'accompagnement sur un instrument d'accompagnement tout le long du playback de la partie solo, et (iii) le playback du second enregistrement de sons sans le playback simultané du premier enregistrement de sons dans un troisième mode de fonctionnement, de sorte que la partie d'accompagnement de la présentation est entendue, la partie solo étant omise, afin de permettre à l'usager de participer comme soliste dans la présentation de la musique en jouant la partie solo sur un instrument solo le long du playback de la partie d'accompagnement, caractérisé en ce que le procédé comprend en outre le playback sur un dispositif de visualisation (2), en synchronisme avec le playback du son, d'une image mouvante d'un chef d'orchestre dirigeant la présentation de sorte à indiquer l'interprétation de la musique étant jouée, afin de permettre à l'usager de participer dans la présentation tout en regardant l'image mouvante sur le dispositif de visualisation (2) et en écoutant simultanément le son provenant de l'appareil de reproduction de sons (1,3,4).

2. Système pour la reproduction d'une présentation de musique instrumentale, de sorte qu'un usager peut participer à la présentation, le système comprenant un premier moyen d'enregistrement de sons fournissant un premier enregistrement de sons pour le playback sur un appareil de reproduction de sons (1,3,4) de la partie solo réalisée par au moins un instrument solo, un second moyen d'enregistrement de sons fournissant un second enregistrement de sons pour le playback sur l'appareil de reproduction de sons (1,3,4) de la partie d'accompagnement réalisée par au moins un instrument d'accompagnement, les premier et second moyens d'enregistrement de sons permettant (i) le playback simultané des premier et second enregistrements de sons dans un premier mode de fonctionnement de sorte que les parties solo et d'accompagnement de la présentation sont entendues ensemble, (ii) le playback du premier enregistrement de sons dans un second mode de fonctionnement sans le playback simultané du second enregistrement de sons, de sorte que la partie solo de la présentation est entendue, la partie d'accompagnement étant omise, afin de permettre à l'usager de participer comme accompagnateur dans la présentation de la musique en jouant la partie d'accompagnement sur un instrument d'accompagnement tout le long du playback de la partie solo, et (iii) le playback du second enregistrement de sons dans un troisième mode de fonctionnement sans pour autant faire le playback du premier enregistrement de sons de sorte que la partie d'accompagnement de la présentation est entendue, la partie solo omise, afin de permettre à l'usager de participer en soliste à la présentation de la musique en jouant la partie solo sur un instrument solo tout le long du playback de la partie d'accompagnement, caractérisé en ce que le système comprend en outre un moyen d'enregistrement d'images fournissant un enregistrement d'images pour le playback sur un dispositif de visualisation (2) en synchronisme avec le playback sonore, d'une image mouvante d'un chef d'orchestre dirigeant la présentation de sorte à indiquer l'interprétation de la musique étant jouée, afin de permettre à l'usager de participer à la présentation tout en regardant l'image mouvante et l'information visuelle sur le dispositif de visualisation (2) et en écoutant simultanément le son de l'appareil de reproduction de sons (1,3,4).

3. Système selon la revendication 2, dans lequel le moyen d'enregistrement d'images fournit un enregistrement d'images pour playback sur le dispositif de visualisation d'une trame titre indiquant le titre de la musique à être jouée avant le début de la présentation.

4. Système selon la revendication 2 ou 3, dans lequel le moyen d'enregistrement d'images fournit un enregistrement d'images pour playback sur le dispositif de visualisation d'une image information indiquant la partie de la musique en train d'être jouée.

5. Système selon la revendication 2, 3 ou 4, dans lequel le moyen d'enregistrement d'images fournit un enregistrement d'images pour playback sur le dispositif de visualisation d'un indicateur clignotant indiquant le tempo de la musique.

6. Système selon la revendication 2, 3, 4 ou 5, dans lequel le moyen d'enregistrement d'images fournit un enregistrement d'images pour playback sur le dispositif de visualisation de la notation musicale indiquant la mesure musicale de la musique.

7. Système selon une quelconque des revendications 2 à 6, dans lequel l'appareil d'enregistrement d'images fournit un enregistrement d'images pour playback sur le dispositif de visualisation d'information image fournissant une indication d'avance du début d'une cadence dans la présentation.

8. Système selon une quelconque des revendications 2 à 7, dans lequel le moyen d'enregistrement d'images fournit un enregistrement d'images pour playback sur le dispositif de visualisation d'une image information indiquant une note de musique à être jouée par le soliste à la fin d'une cadence de la performance.

9. Système selon une des revendications 2 à 8, dans lequel le moyen d'enregistrement d'images fournit un enregistrement d'images pour playback sur le dispositif de visualisation d'une information image indiquant la fin de la présentation.

10. Système selon une quelconque des revendications 2 à 9, dans lequel l'appareil d'enregistrement d'images fournit un enregistrement optique pour playback sur le dispositif de visualisation de sorte à fournir une représentation avec image divisée ayant deux ou plusieurs parties montrant respectivement l'image du chef d'orchestre et des images d'un ou plusieurs joueurs d'instrument.
